# EUROPÄISCHE PATENTSCHRIFT

(11) **EP 0 741 847 B1**
(45) Veröffentlichungstag und Bekanntmachung des Hinweises auf die Patenterteilung: **14.04.1999**
(21) Anmeldenummer: 95906342.1
(22) Anmeldetag: 23.01.1995
(51) Int. Cl.: F16K 27/10, B23P 15/00

(54) **ARMATURENGEHÄUSE**
BODY FOR VALVES AND FITTINGS
CORPS D'APPAREIL DE ROBINETTERIE

(30) Priorität: 26.01.1994 DE 4402163
(43) Veröffentlichungstag der Anmeldung: 13.11.1996
(73) Patentinhaber: KSB Aktiengesellschaft, 67227 Frankenthal (DE)
(72) Erfinder: KRAFT, Gerd, D-76676 Graben-Neudorf (DE)
(86) Internationale Anmeldenummer: EP9500231
(87) Internationale Veröffentlichungsnummer: WO9520738

(56) Entgegenhaltungen:
- DE-C- 638 462
- GB-A- 2 022 782
- US-A- 2 834 097

## Beschreibung

Die Erfindung betrifft ein Armaturengehäuse.

Gehäuse für Armaturen sind in den unterschiedlichsten Formen bekannt. So zeigt die DE-AS 21 64 929 ein geschweißtes Schiebergehäuse, die DE-AS 23 31 748 ein geschweißtes Hubventilgehäuse und das DE-GM 72 43 042 ein zusammengeschweißtes Gehäuse für Kugelhähne. Bei den beiden erstgenannten Gehäusen ist eine Flanschverbindung dargestellt, deren scheibenförmige Flanschelemente mit entsprechenden Gegenflanschen der anzuschließenden Rohrleitungen zusammenwirken, wobei Schraubenelemente dabei die jeweiligen Flanschelemente zusammenpressen. Hiervon abweichend zeigt das DE-GM 72 43 042 sogenannte Schraubflansche, also mit Innen-oder Außengewinde versehene Rohrstutzen, die in das Gehäuse eingeschoben und damit durch umlaufende Schweißnähte verbunden werden. Diese Lösungen haben jedoch den Nachteil, daß die Schweißnaht, die die Flanschelemente mit dem Gehäuse verbindet, direkt dem im Armaturengehäuse befindlichen Medium ausgesetzt ist. Bei gefährlichen Medien bzw. bei hohen Drücken muß deshalb die Schweißnaht aufwendig geprüft werden, um den entsprechenden Sicherheitsvorschriften genügen zu können.

Zur Minimierung des Prüfungsaufwandes ist durch die DE-PS 28 07 740 eine Ausführungsform bekannt, bei der eine einzige umlaufende Schweißnaht ein Gehäusemittelteil mit einem darin befindlichen Dichtring und einem daran anliegenden Flanschelement verbindet. Dies erfolgt mit Hilfe des Elektronenstrahlschweißens, so daß in diesem Stand der Technik durch zwei kegelstumpfförmige Elektronenschweißnähte das gesamte Gehäuse zusammengehalten wird. Die wahlweise Verwendung von normalen Auftragsschweißungen und Verbindungen durch Elektronenstrahlschweißungen ist durch die EP-B 0 027 765 bekannt. Aber auch hier sind die Schweißnähte direkt dem Medium ausgesetzt, so daß aufwendige Prüfungen notwendig sind.

Durch die US-A-2 834 097 ist ein Armaturengehäuse bekannt, bei dem innerhalb des Gehäuses eine Art Wärmesperre für eine Schweißnaht offenbart ist. An das Gehäuse anzuschweißende Flansche sind pilzförmig ausgebildet. Dabei weist eine Flanschscheibe einen integrierten und stufenförmig ausgebildeten Hals auf, der ungefähr 1,5 mal länger als die Dicke der Flanschscheibe ausgebildet ist. Der Hals ist mit einem im Durchmesser kleineren Abschnitt in das Gehäuse eingepreßt oder eingeschrumpft. Dabei liegt eine Stufe stirnseitig als Anschlag am Gehäuse an. Der verbleibende Abschnitt des Halses mit der integrierten Flanschscheibe bildet eine stirnseitige Gehäuseverlängerung. Im Bereich der Anlage zwischen Hals und Gehäuse wird dann aus radialer Richtung eine umlaufende Schweißnaht erzeugt. Um die Schweißnaht vor einer zu schnellen Abkühlung zu schützen, wodurch sich das Materialgefüge nachteilig verändern würde, verfügt der Hals im Bereich der Schweißnaht über eine Nut. Diese Nut dient als Wärmesperre und zusätzlich als Kontrollmittel für eine die Schweißnaht erzeugende Person. Diese Art einer Flanschverbindung ist sehr aufwendig und erfordert erhebliche Materialanhäufungen.

Der Erfindung liegt das Problem zugrunde, die Herstellung eines Armaturengehäuses im Hinblick auf fertigungstechnische Bearbeitung und verringertem Prüfaufwand zu optimieren. Die Problemlösung sieht ein Armaturengehäuse vor, welches aus mehreren Teilen zusammengesetzt ist und mit Flanschanschlüssen in ein Rohrleitungssystem einsetzbar ist, die Gehäuseteile als Guß- und/oder Schmiedeteile ausgebildet sind, wobei kraftschlüssige Verbindungen die Gehäuseteile zusammenhalten, scheibenförmige Flanschelemente als separate Bauteile ausgebildet und über zugehörige Gehäusestutzen aufschiebbar ausgebildet und mit den Gehäuseteilen verbindbar sind, wobei die Verbindung zwischen Flanschelement und Gehäusestutzen als Elektronenstrahlschweißung ausgeführt ist, deren den Spalt zwischen Gehäusestutzen und Flanschelement ausfüllende Schweißnaht am radial inneren Umfang eines Flanschelementes liegt und außerhalb des mediumberührten Gehäusebereiches angeordnet ist. Aufgrund dieser Lösung ist es möglich, für das Flanschelement Materialien vorzusehen, welche in bezug auf das abzusperrende Medium nicht so hochwertig ausgeführt sein müssen, wie die übrigen Gehäuseteile. Beispielsweise können problemlos Edelstahlgehäuse mit normalen Flanschen aus Kohlenstoffstahl oder auch Hastelloy-Gehäuseteile mit Edelstahlflanschen verbunden werden. Aufgrund der außerhalb des Gehäuses befindlichen Elektronenstrahlschweißnaht kann diese durch das abzusperrende Medium nicht beeinflußt werden und der Prüfaufwand ist geringer.

Bei der spanabhebenden Bearbeitung des Gehäuses genügt es, im Bereich der Flanschteiles eine Aufschubfläche, einen Absatz oder dergleichen vorzusehen und gegebenenfalls gemäß einer Ausgestaltung der Erfindung einen Gehäusestutzen mit einer Anlage für das Flanschelement auszustatten. Für die Montage genügt es, ein scheibenförmiges Flanschelement auf die entsprechende Fläche am Gehäuse aufzuschieben, bzw. an der daran befindlichen Anlage anliegen zu lassen. Durch die Verwendung von scheibenförmigen Flanschelementen ist eine weitere Reduzierung des Bauaufwandes möglich. Die bisher benutzten Flanschelemente sind zusätzlich mit axial verlaufenden Anschweißstutzen ausgerüstet, um eine sichere Verbindung mit einem damit korrespondierenden Gehäuseabschnitt zu gewährleisten. Dies war wegen der Anwendung findenden Schweißverfahren und dem Auftrags- oder Reibschweißen notwendig. Demgegenüber sind die scheibenförmigen Elemente, die keinen axialen Anschweißstutzen aufweisen, wesentlich einfacher herstellbar.

Nach einer weiteren Ausgestaltung der Erfindung ist die Anlage als ein nach erfolgter Elektronenstrahlschweißung spanabhebend entfernbarer Gehäusebund ausgebildet. Das Anliegenlassen des scheibenförmigen Flanschelementes erspart die Verwendung von Einspannwerkzeugen oder Zentrierhilfen und reduziert den gesamten Montageaufwand. Ein Entfernen dieser Anlage nach dem Elektronenstrahlschweißen erlaubt in einfachster Weise eine Kontrolle, ob die Schweißverbindung auch vollständig durchgeschweißt wurde. Weiterhin kann dies eine Maßnahme sein, die den ästhetischen Gesamteindruck des Armaturengehäuseteiles verbessert. Die Verwendung des Elektronenstrahlschweißens zur Herstellung der Flanschverbindung stellt insofern eine vorteilhafte Wahl dar, weil damit die in die Bauteile einzubringende Wärmebelastung am geringsten ist und die Verformungen der zu fügenden Bauteile am minimalsten sind.

Der Verzug der miteinander zu fügenden Teile ist praktisch gegen Null gehend. Aufwendige nachträgliche Wärmebehandlungen zum Ausgleichen der Schweißspannungen können ebenfalls entfallen. Es erlaubt die schweißtechnische Verbindung von bereits fertig bearbeiteten Teilen und hat zudem den gravierenden Vorteil der Verbindungsmöglichkeit von verschiedenen Materialien. Vorzugsweise werden diejenigen Materialien ausgewählt, die für den ihnen obliegenden Verwendungszweck am besten geeignet sind.

Ein Ausführungsbeispiel der Erfindung ist in den Zeichnungen dargestellt und wird im folgenden näher beschrieben. Es zeigen die
- Fig. 1: ein scheibenförmiges Flanschelement im Querschnitt, die
- Fig. 2: als Querschnitt ein Gehäuseteil eines Armaturengehäuses und die
- Fig. 3: ein am Gehäuseteil angeschweißtes Flanschelement.

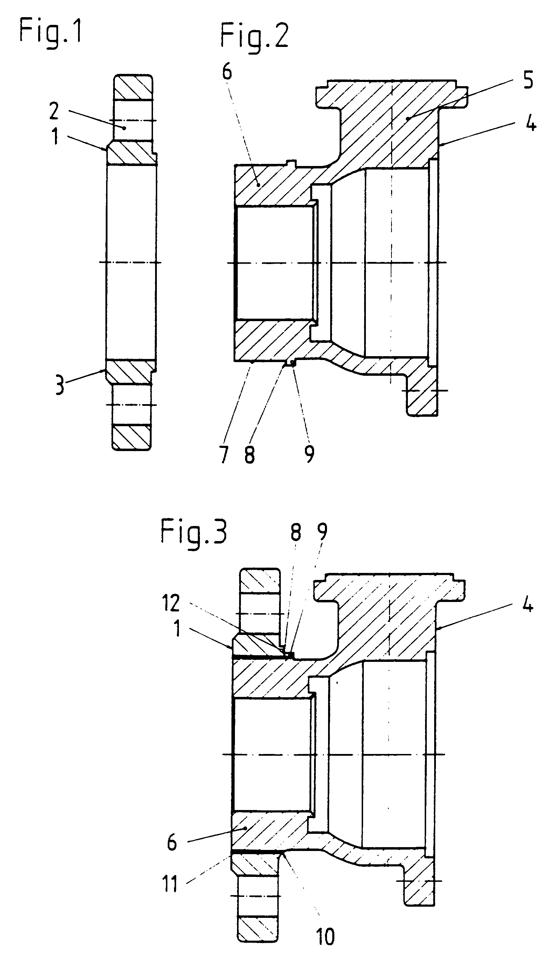

In der Fig. 1 ist ein fertig bearbeitetes scheibenförmiges Flanschelement 1 gezeigt, in dem bereits die Bohrungen 2 für die spätere Flanschverschraubung sowie die Dichtflächen 3 für die Anlage einer Dichtung vorgesehen sind. Dieses vorgefertigte Bauteil kann lagerhaltig bevorratet werden, um im Bedarfsfall mit einem entsprechenden Armaturengehäuse verbunden zu werden.

Die Fig. 2 zeigt ein Gehäuseteil 4 einer Armatur, welches hier halbfertig bearbeitet ist. Im Bereich des Gehäusehalses 5 müssen noch die entsprechenden Bohrungen für das Betätigungselement des Verschlußteiles angeordnet werden. Die Innenkontur kann bereits für den jeweiligen Verwendungszweck fertig gestaltet sein. Im Bereich der Gehäusestutzen 6 weist das Gehäuseteil 4 eine Aufnahme 7 auf, die gehäuseseitig mit einer Anlagefläche 8 versehen ist, die Bestandteil eines Bundes 9 ist. Falls dieses Gehäusebauteil Bestandteil eines Armaturengehäuses werden soll, welches direkt in eine Rohrleitung eingeschweißt wird, braucht im Bedarfsfall die Anlage 8 und der Bund 9 nur noch abgedreht zu werden, um den Gehäusestutzen 6 des Gehäuses selbst als Schweißflansch auszubilden. Soll dagegen das Armaturengehäuse mit Hilfe üblicher scheibenförmiger Flanschelemente 1 in eine Rohrleitung eingebaut werden, dann kann - je nach den betriebsinternen Arbeitsabläufen - ein halb- oder fertigbearbeitetes Gehäuseteil mit dem Flanschelement verschweißt werden.

Die Fig. 3 zeigt das Gehäuseteil 4 nach erfolgter Verschweißung. Dazu wurde das Flanschelement 1 so weit auf den Gehäusestutzen 6 aufgeschoben, bis es an der Anlage 8 des Gehäusebundes 9 zur Anlage kommt. In dem Ausführungsbeispiel ist dies am Flanschelement 1 oberhalb der waagerecht verlaufenden Gehäusemittellinie dargestellt. Die Darstellung des Flansches unterhalb der Gehäusemittellinie zeigt einen Abrundungsradius 10, der nach der Verschweißung spanabhebend erzeugt wird. Dies dient zum einen ästhetischen Zwecken, zum anderen kann damit in einfachster Weise überprüft werden, ob die Schweißnaht 11 auch vollständig durchgeschweißt wurde. Ein hierzu am Flanschelement 1 angebrachter vorstehender kurzer Bund 12 erleichtert die spätere spanabhebende Bearbeitung.

## Patentansprüche

1. Armaturengehäuse, welches aus mehreren Teilen zusammengesetzt ist und mit Flanschanschlüssen in ein Rohrleitungssystem einsetzbar ist, die Gehäuseteile (4) als Guß und/oder Schmiedeteile ausgebildet sind, wobei kraftschlüssige Verbindungen die Gehäuseteile (4) zusammenhalten, scheibenförmige Flanschelemente (1) als separate Bauteile ausgebildet und über zugehörige Gehäusestutzen (6) aufschiebbar ausgebildet und mit den Gehäuseteilen verbindbar sind, wobei die Verbindung zwischen Flanschelement (1) und Gehäusestutzen (6) als Elektronenstrahlschweißung ausgeführt ist, deren den Spalt zwischen Gehäusestutzen (6) und Flanschelement (1) ausfüllende Schweißnaht (11) am radial inneren Umfang eines Flanschelementes (1) liegt und außerhalb des medienberührten Gehäusebereiches angeordnet ist.

2. Armaturengehäuse nach Anspruch 1, dadurch gekennzeichnet, daß ein Gehäusestutzen (6) mit einer Anlage (8) für ein Flanschelement (1) versehen ist.

3. Armaturengehäuse nach Anspruch 1 oder 2, dadurch gekennzeichnet, daß die Anlage (8) als ein nach erfolgter Elektronenstrahlschweißung spanabhebend entfernbarer Gehäusebund (9) ausgebildet ist.

## Claims

1. Body for valves and fittings which is composed of a plurality of parts and, together with flange connections, can be inserted into a system of pipelines, the body parts (4) being designed as castings and/or forgings, force-fitting connections holding the body parts (4) together, while disc-like flange elements (1) are designed as separate components and can be pushed over associated body connection pieces (6) and can be joined to the body parts, the joint between flange element (1) and body connection piece (6) being designed as an electron-beam weld, the weld seam (11) of which, which fills up the gap between body connection piece (6) and flange element (1), lying on the radially inner circumference of a flange element (1) and being arranged outside that region of the body which comes into contact with fluids.

2. Body for valves and fittings according to Claim 1, characterized in that a body connection piece (6) is provided with a stop (8) for a flange element (1).

3. Body for valves and fittings according to Claim 1 or 2, characterized in that the stop (8) is designed as a body collar (9) which can be removed by machining after the electron-beam welding has taken place.

## Revendications

1. Corps d'appareil de robinetterie, qui est composé de plusieurs parties et qui peut être monté dans un réseau de canalisations par des raccords à brides, les parties du corps (4) étant constituées par des pièces moulées et/ou forgées, dans lequel des assemblages serrés solidarisent les parties du corps (4), des éléments de bride en forme de disque (1) constituent des composants séparés et peuvent être glissés sur des tubulures appropriées (6) du corps et peuvent être assemblés aux parties du corps, dans lequel l'assemblage entre un élément de bride (1) et une tubulure du corps (6) est exécuté sous la forme d'une soudure par faisceau d'électrons, dont le cordon de soudure (11) remplissant la fente entre la tubulure du corps (6) et l'élément de bride (1) se situe à la périphérie radialement intérieure d'un élément de bride (1) et est disposé à l'extérieur de la zone du corps en contact avec le fluide.

2. Corps d'appareil de robinetterie suivant la revendication 1, caractérisé en ce qu'une tubulure du corps (6) est pourvue d'une butée (8) pour un élément de bride (1).

3. Corps d'appareil de robinetterie suivant la revendication 1 ou 2, caractérisé en ce que la butée (8) est constituée par un bourrelet du corps (9) pouvant s'enlever par usinage après exécution de la soudure par faisceau d'électrons.
